# EUROPÄISCHE PATENTSCHRIFT

(11) **EP 3 433 585 B1**
(45) Veröffentlichungstag und Bekanntmachung des Hinweises auf die Patenterteilung: **30.03.2022**
(21) Anmeldenummer: 17704474.0
(22) Anmeldetag: 13.02.2017
(51) Int. Cl.: G01F 23/296, G01F 1/66

(54) **ULTRASCHALLWANDLER ZUR VERWENDUNG IN EINEM ULTRASCHALL-DURCHFLUSSMESSGERÄT ODER IN EINEM ULTRASCHALL-FÜLLSTANDSMESSGERÄT**
ULTRASONIC TRANSDUCER FOR USE IN AN ULTRASONIC FLOWMETER OR IN AN ULTRASONIC FILL LEVEL MEASURING DEVICE
TRANSDUCTEUR ULTRASONORE DESTINÉ À ÊTRE EMPLOYÉ DANS UN DÉBITMÈTRE ULTRASONORE OU DANS UN NIVEAUMÈTRE ULTRASONORE

(30) Priorität: 22.03.2016 DE 102016105338
(43) Veröffentlichungstag der Anmeldung: 30.01.2019
(73) Patentinhaber: Endress+Hauser Flowtec AG, 4153 Reinach (CH)
(72) Erfinder: UEBERSCHLAG, Pierre, 68300 Saint-Louis (FR); BERGER, Andreas, 79686 Hasel-Glashütten (DE); BEZDEK, Michal, 4147 Aesch (CH)
(74) Vertreter: Andres, Angelika Maria
(86) Internationale Anmeldenummer: PCT/EP2017/053114
(87) Internationale Veröffentlichungsnummer: WO 2017/182154

(56) Entgegenhaltungen:
- FR-A1- 2 952 221
- US-A1- 2003 164 661
- US-A1- 2013 014 592
- US-A1- 2013 167 654

## Beschreibung

Die Erfindung betrifft einen Ultraschallwandler zur Verwendung in einem Ultraschall-Durchflussmessgerät zur Messung der Durchflussgeschwindigkeit oder dem Volumendurchfluss von Medien in einer Rohrleitung oder in einem Ultraschall-Füllstandsmessgerät zur Messung von dem Füllstand von Medien in einem Behälter.

Ultraschallwandler zur Messung von Durchflussgeschwindigkeiten oder Füllständen werden schon seit langem in zahlreichen Varianten eingesetzt. Ein wesentliches, immer wieder auftretendes Problem bei dem Einsatz von Ultraschallwandlern ist die unerwünschte Wechselwirkung zwischen einem Ultraschallwandlerelement zur Erzeugung und/oder Detektion von Ultraschallsignalen und einer Messvorrichtung durch den über den Einbau des Ultraschallwandlers in die Messvorrichtung hergestellten Kontakt. Die Wechselwirkung führt zum Übertragen von Schwingungen der Messvorrichtung zum Ultraschallwandlerelement und überlagert dabei ein Messsignal, was die Erfassung von Messwerten erschwert. Die Schwingungen der Messvorrichtung können dabei aus einer ferneren Umgebung stammen, jedoch auch durch vom Ultraschallwandlerelement oder von weiteren Ultraschallwandlern erzeugten Nachschwingungen. Nachschwingungen entstehen durch das Ausklingen des Ultraschallwandlerelements nach Erzeugung eines Ultraschallsignals, welches in ein Medium eingestrahlt wird.

Um diesem Problem zu begegnen, wird beispielsweise ein Gehäuse des Ultraschallwandlers welches das Ultraschallwandlerelement aufweist, mittels einer Hülle akustisch von einem Messgehäuse isoliert, siehe US2015308870A1. Diese Lösung hat den Nachteil, dass aufgrund einer nicht herstellbaren perfekten akustischen Isolation sämtliche Eigenschwingungen des Gehäuses angeregt werden können und damit das Ultraschallwandlerelement stören.

Eine andere Herangehensweise, das Problem der Wechselwirkung zwischen dem Ultraschallwandlerelement und der Messvorrichtung zu umgehen ist im Dokument EP1340964A1 offenbart. Eine Ultraschallwandleranordnung mit einem Ultraschallwandlerelement und einer Ultraschallwellen abstrahlenden Biegeplatte wird durch ein Filter gehalten, wobei das Filter für eine akustische Trennung eines Ultraschallwandlerelements von einem Gehäuse sorgt. Das Filter kontaktiert dabei die Biegeplatte an ihrem äußeren Rand und beeinflusst somit stark die Schwingungseigenschaften der Biegeplatte. Darüber hinaus ist die Kontaktierung eines akustischen Filters mit einer stark schwingenden Biegeplatte nachteilhaft für eine akustische Entkopplung des Ultraschallwandlers vom Gehäuse.

US2013167654 betrifft einen Ultraschallwandler für ein Ultraschall-Durchflussmessgerät, umfassend ein erstes Gehäuseteil und ein zweites Gehäuseteil. Zur Flüssigkeitsentkopplung und akustischen Entkopplung sind mehrere Dichtungen vorgesehen.

Aufgabe der Erfindung ist es daher, einen Ultraschallwandler mit einer akustischen Isolierung vorzuschlagen, welcher Störungen durch Gehäuseschwingungen vermeidet, wobei die akustische Isolierung nicht mit einer Abstrahlfläche kontaktiert ist. Die Aufgabe wird erfindungsgemäß gelöst durch einen Ultraschallwandler gemäß dem unabhängigen Anspruch 1.

Der erfindungsgemäße Ultraschallwandler umfasst dabei folgende Elemente: mindestens ein Wandlerelement zur Erzeugung und/oder Detektion von Ultraschallsignalen;
und mindestens einen akustischen Transformator, wobei der akustische Transformator mit dem Wandlerelement akustisch und mechanisch gekoppelt ist;
und wobei der akustische Transformator eine Abstrahlfläche und eine Längsachse aufweist, welche die Abstrahlfläche schneidet;
und mindestens ein Gehäuse mit mindestens einem Gehäusekörper, welcher Gehäusekörper mindestens eine Gehäusekammer mit einer Gehäusewandung aufweist, welche Gehäusewandung den akustischen Transformator zumindest teilweise umschließt, wobei das Gehäuse akustisch und mechanisch mit einer Messrohrwand oder einer Behälterwand verbunden ist,
wobei der akustische Transformator über eine Mantelfläche des Transformators mittels einer ersten akustischen, ringförmigen Isolierung mechanisch mit dem Gehäuse verbunden ist, welche erste akustische Isolierung mit dem Medium beaufschlagbar ist.

In einer Ausgestaltung des Ultraschallwandlers ist ein erster zum Medium hin gewandter Bereich von einem vom Medium abgewandten zweiten Bereich in der Gehäusekammer durch die erste akustische Isolierung mediendicht getrennt.

Die erste akustische Isolierung weist einen ersten Isolator und einen zweiten Isolator und einen dritten Isolator auf, wobei der erste Isolator mit dem akustischen Transformator in Kontakt steht, und wobei der dritte Isolator mit dem Gehäuse in Kontakt steht, und wobei der zweite Isolator zwischen dem ersten Isolator und dem dritten Isolator angeordnet ist. Der zweite Isolator wird durch den ersten Isolator und den dritten Isolator zumindest teilweise gehalten und der erste Isolator und der dritte Isolator sind radial eingespannt. Der zweite Isolator ist schwingfähig gelagert.

In einer Ausgestaltung des Ultraschallwandlers sind die Isolatoren jeweils aus einem Material der folgenden Materialiengruppen gefertigt sind:
Metall, Keramik, Kunststoff, wobei der Kunststoff insbesondere ein Elastomer ist, wobei in Kontakt stehende Isolatoren unterschiedliche akustische Impedanzen aufweisen.

In einer Ausgestaltung des Ultraschallwandlers ist der zweite Isolator durch den ersten Isolator und/oder den dritten Isolator gehalten.

In einer Ausgestaltung des Ultraschallwandlers weist die Gehäusewandung im zweiten Bereich einen ersten axialen Anschlag aufweist, welcher axiale Anschlag dazu eingerichtet ist, bei hohen Drücken des Mediums einen Halt für den zweiten Isolator zu bieten.

In einer Ausgestaltung des Ultraschallwandlers weist die Gehäusewandung im zweiten Bereich eine Führung auf, welche Führung dazu eingerichtet ist, den zweiten Isolator in axialer Richtung zu führen.

In einer Ausgestaltung des Ultraschallwandlers ragt der mindestens eine Isolator axial über die Abstrahlfläche des akustischen Transformators heraus.

In einer Ausgestaltung des Ultraschallwandlers sind der akustische Transformator, die erste akustische Isolierung und das Gehäuse im Wesentlichen rotationssymmetrisch bezüglich der Längsachse.

In einer Ausgestaltung des Ultraschallwandlers weist das Gehäuse auf der dem Medium abgewandten Seite einen zweiten axialen Anschlag auf, welcher axiale Anschlag mit dem akustischen Transformator und/oder dem Wandlerelement mechanisch gekoppelt ist, und wobei der zweite axiale Anschlag dazu eingerichtet ist, den akustischen Transformator und/oder den Wandlerelement zu halten.

In einer Ausgestaltung des Ultraschallwandlers weist der Ultraschallwandler eine zweite akustische Isolierung auf, welche zweite akustische Isolierung dazu eingerichtet ist, den zweiten axialen Anschlag mit dem akustischen Transformator und/oder mit dem Wandlerelement mechanisch zu verbinden und akustisch zu entkoppeln.

In einer Ausgestaltung des Ultraschallwandlers ist das Wandlerelement ein Piezowandler.

In einer Ausgestaltung des Ultraschallwandlers ist das Gehäuse drucktragend.

In einer Ausgestaltung des Ultraschallwandlers sind der akustische Transformator und/oder das Wandlerelement mittels eines Federelements gegen den zweiten axialen Anschlag vorgespannt.

Es wird also durch die vorliegende Erfindung ein von einem Gehäuse eines Ultraschallwandlers akustisch isoliertes Ultraschallwandlerelement vorgeschlagen.

Im Folgenden wird die Erfindung anhand von in Zeichnungen dargestellten beispielhaften Ausführungsformen näher erläutert.

Es zeigt:
Fig.1: Ein Ultraschall-Durchflussmessgerät mit zwei erfindungsgemäßen Ultraschallwandlern;
Fig. 2: Einen schematischen Längsschnitt einer Ausführungsform eines erfindungsgemäßen Ultraschallwandlers.
Fig. 3: Einen schematischen Längsschnitt einer weiteren Ausführungsform eines erfindungsgemäßen Ultraschallwandlers.

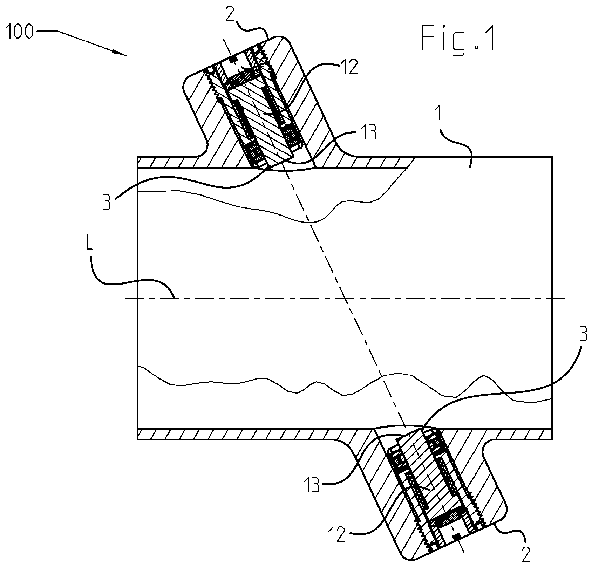

Fig. 1 zeigt ein Ultraschall-Durchflussmessgerät 100 welches nach dem Laufzeit- oder Laufzeitdifferenz-Prinzip arbeitet, wobei das Ultraschall-Durchflussmessgerät ein Messrohr 1 mit einer im Wesentlichen geraden Messrohrachse AM mit zwei Anschlüssen 2 für erfindungsgemäße Ultraschallwandler 3 aufweist. Die Ultraschallwandler 3 sind dabei so im Messrohr angeordnet, dass akustische Transformatoren 21 der Ultraschallwandler 3 eine gemeinsame Längsachse L aufweisen, wobei die Längsachse L geneigt zur Messrohrachse AM steht, so dass eine Komponente einer Ausbreitungsrichtung eines vom Ultraschallwandler 3, 4 ausgesandten Ultraschallsignals in oder gegen die Strömungsrichtung eines durch das Messrohr 1 strömenden Mediums gerichtet ist. Bei der Verwendung des Laufzeitdifferenz-Prinzip wird ausgenutzt, dass eine Ultraschallsignallaufzeit eines gegen die Strömungsrichtung des durch das Messrohr strömenden Mediums laufenden Ultraschallsignals etwas größer ist, als eine Ultraschallsignallaufzeit eines mit der Strömung des Mediums laufenden Ultraschallsignals. Die Laufzeitdifferenz der Ultraschallsignale ist abhängig von der Strömungsgeschwindigkeit, so dass aus der Laufzeitdifferenz Rückschlüsse auf die Strömungsgeschwindigkeit des Mediums im Messrohr gezogen werden können.

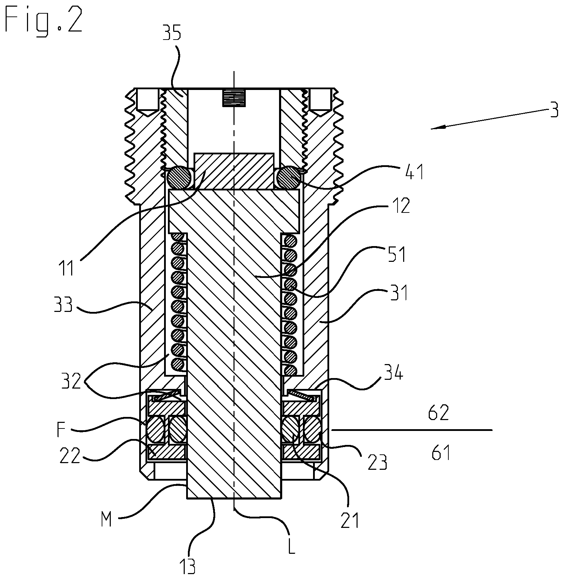

Fig. 2 zeigt einen detailgetreuen Längsschnitt eines erfindungsgemäßen Ultraschallwandlers 3 mit einem Gehäuse, welches einen bezüglich der Längsachse L im Wesentlichen rotationssymmetrischen Gehäusekörper 31 und eine Gehäusekammer 32 mit einer Gehäusewandung 33 aufweist. Die Gehäusewandung 33 umschließt ein Wandlerelement 11, beispielsweise ein Piezowandlerelement, welches zum Erzeugen und Nachweisen von Ultraschallsignalen eingerichtet ist. Die Gehäusewandung 33 umschließt des Weiteren teilweise einen bezüglich der Längsachse L im Wesentlichen rotationssymmetrischen akustischen Transformator 12, wobei eine stirnseitige Abstrahlfläche 13 des akustischen Transformators 12 aus der Gehäusekammer 32 herausragt. Der akustische Transformator 12 kann jedoch auch so ausgestaltet sein, dass er nicht aus der Gehäusekammer 32 herausragt. Der akustische Transformator 12 ist mit dem Wandlerelement 11 akustisch und mechanisch gekoppelt, wobei die Kopplung durch eine Klebeverbindung oder durch Vorspannung gegen eine zweite akustische Isolierung mittels eines Federelements 51 sichergestellt sein kann. Ein vom Wandlerelement 11 erzeugtes Ultraschallsignal wird vom akustischen Transformator aufgenommen und zur Abstrahlfläche 13 geleitet. Die Abstrahlfläche 13 überträgt das Ultraschallsignal zumindest teilweise in das das Messrohr 1 durchströmende Medium. Auf die gleiche Art und Weise nimmt die Abstrahlfläche 13 ein über das Medium eintreffende Ultraschallsignal auf und leitet es zum Wandlerelement 11, wobei das Wandlerelement 11 das Ultraschallsignal in ein elektrisches Signal wandelt.

Praktisch ist das beim Wandlerelement ankommende Ultraschallsignal immer von Störeinflüssen überlagert, was die Aufnahme einer Messgröße erschwert. Äußerst wichtig für ein sauberes Funktionieren eines Ultraschallwandlers 3 ist daher eine weitgehende Minimierung dieser Störeinflüsse. Ein großer Teil dieser Störeinflüsse ist durch die Übertragung von Körperschall des Messrohrs 1 über das Gehäuse 31 zum Wandlerelement 11 des Ultraschallwandlers gegeben. Ein wesentliches Merkmal der Erfindung ist es daher, den akustischen Transformator 12 und das Wandlerelement 11 durch eine erste akustische Isolierung vom Gehäuse 31 akustisch zu entkoppeln, wobei die Isolierung des Weiteren dazu eingerichtet ist, den akustischen Transformator radial zu halten, damit die Abstrahlrichtung konstant bleibt. In dem in Fig. 2 dargestellten Ausführungsbeispiel des erfindungsgemäßen Ultraschallwandlers weist die erste akustische Isolierung einen ersten Isolator 21, einen zweiten Isolator 22 und einen dritten Isolator 23 auf, wobei die Isolatoren im Wesentlichen rotationssymmetrisch bezüglich der Längsachse L sind. Der Isolator 21 steht in Kontakt zu einer Mantelfläche M des akustischen Transformators 12, der Isolator 23 steht in Kontakt zur Gehäusewandung 33 und Isolator 22 ist zwischen den Isolatoren 21 und 23 angeordnet und wird durch diese zumindest teilweise gehalten, wobei die Isolatoren 21 und 23 radial eingespannt sind. Die Isolatoren 21, 22 und 23 sind dabei jeweils aus einem Metall wie beispielsweise Stahl, Titan oder Aluminium oder einem keramischen Werkstoff oder einem Kunststoff gefertigt, wobei der Isolator 22 bevorzugt aus einem Metall oder einer Keramik gefertigt ist. Um das Weiterleiten von Störsignalen zwischen Gehäuse und akustischem Transformator zu unterbinden, weisen das Gehäuse, die Isolatoren und der akustische Transformator bevorzugt wechselnde akustische Impedanzen auf. Durch die dadurch verursachten Reflektionen des Störsignals und der damit erhöhten Verweildauer des Störsignals in der ersten akustischen Isolierung wird das Störsignal stärker gedämpft. Als weitere Folge wird das Störsignal zeitlich gedehnt, was eine Verschiebung der Störsignalfrequenzen zu tieferen Werten zur Folge hat. Somit kann das Störsignal durch Wahl von Isolatoren 21, 22, 23 mit abwechselnden Impedanzen in einen weniger störenden Frequenzbereich geschoben werden. Des Weiteren weisen die Isolatoren 21 und 23 einen im Wesentlichen ellipsenförmigen Querschnitt auf. Störeinflüsse, welche vom Messrohr 1 über das Gehäuse 31 des Ultraschallwandlers zum Isolator 23 gelangen, werden von diesem nur zu einem geringen Anteil an den Isolator 22 weitergegeben, da die geometrischen Eigenschaften des ellipsenförmigen Querschnitts das Weiterleiten von akustischen Störeinflüssen behindern. Bei Verwendung von akustisch dämpfenden Materialien wie beispielsweise Elastomeren kann die Weiterleitung von Störeinflüssen weiter unterdrückt werden. Auf die gleiche Art und Weise behindert der Isolator 21 die Weiterleitung von Störeinflüssen vom Isolator 22 zum akustischen Transformator 12. Der Isolator 22 ist dabei schwingfähig gelagert, so dass er von den Isolatoren 21 und 23 übertretende Signale in Form von Schwingungsenergie speichern und verlangsamt abgeben kann, was zusätzlich die Störsignalübertragung zwischen den Isolatoren 21 und 23 behindert und verlangsamt. Die Gehäusewandung 33 weist einen ersten axialen Anschlag 34 auf, welcher ein Zurückweichen des akustischen Isolators 22 aufgrund eines hohen Mediendrucks begrenzt. Der akustische Isolator kann dabei durch ein federndes Element vorgespannt sein, so dass der Isolator 22 bei nachlassendem Mediendruck in Richtung des Mediums geschoben wird. Der Isolator 22 weist einen Querschnitt auf, so dass der erste Isolator 21 und/oder der dritte Isolator 23 zumindest teilweise vom zweiten Isolator 22 umfasst und dadurch bei hohen Mediendrücken von dem zweiten Isolator 22 gehalten sind. Die Gehäusewandung 33 kann auf der zum Medium gerichteten Seite einen weiteren axialen Anschlag aufweisen, welche die Isolierung am Herausfallen aus dem Gehäuse 31 hindert. Das Gehäuse weist des Weiteren eine Führung auf, welche Führung den zweiten Isolator 22 bei Bewegung parallel zur Längsachse L führt.

Die erste akustische Isolierung stellt eine mediendichte Trennung dar, so dass die Gehäusekammer 32 in einen ersten, zum Medium hin gewandten Bereich 61 und in einen vom Medium abgewandten Bereich 62 getrennt ist, wobei der Bereich 61 vom Medium beaufschlagt ist und wobei der Bereich 62 frei vom das Messrohr durchströmenden Medium ist. Das Weiterleiten von Ultraschallsignalen zum Gehäuse 31, welche Ultraschallsignale vom Wandlerelement 11 ausgehen, ist auf die oben beschriebene Art und Weise entsprechend behindert. Die erste akustische Isolierung sorgt also für eine Verminderung von Störeinflüssen auf das Wandlerelement ausgehend vom Messrohr 1 und auch für eine Verminderung von Ultraschallsignalen, welche vom Wandlerelement 11 über das Gehäuse 31 in das Messrohr gelangen.

Der in Fig. 2 dargestellte Ultraschallwandler weist auf der vom Medium abgewandten Seite die zweite akustische Isolierung 41 auf, wobei die Gehäusewandung 33 einen zweiten axialen Anschlag 35 aufweist, gegen welchen zweiten axialen Anschlag 35 der akustische Transformator 12 mit dem Wandlerelement 11 durch ein Federelement 51 gedrückt werden, wobei der akustische Transformator 12 durch den zweiten axialen Anschlag gehalten wird. Der zweite axiale Anschlag 35 ist also drucktragend. Die zweite akustische Isolierung 41 kann dabei kugelförmige oder ringförmige Elemente aufweisen. Kugelförmige Elemente haben den Vorteil, dass sie über Kontaktpunkte eintretende Störsignale räumlich breit auffächern, so dass die eintretenden Störsignale nur einen kleinen Austrittspunkt finden. Somit verbleibt ein großer Teil der Störsignalenergie in den kugelförmigen Elementen und wird durch Dämpfung dissipiert. Bei ringförmigen Elementen ist die räumlich breite Auffächerung zumindest in einer Raumdimension sichergestellt.

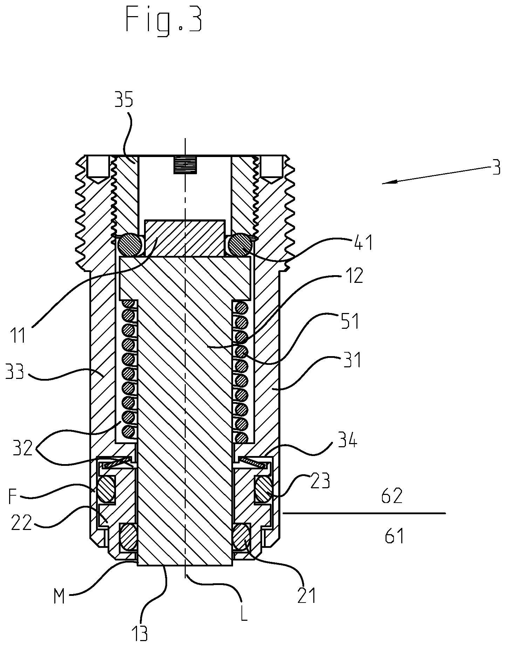

Der in Fig. 3 dargestellte Ultraschallwandler unterscheidet sich durch den in Fig. 2 dargestellten Ultraschallwandler dadurch, dass die Anordnung der Isolatoren 21, 22, 23 eine asymmetrische Struktur aufweist. Durch asymmetrische Strukturen lassen sich die Störsignalwege durch die erste akustische Isolierung beeinflussen, so dass durch günstig gewählte asymmetrische Strukturen in Kombination mit ausgesuchten Fertigungsmaterialen der Isolatoren 21, 22, 23 das Weiterleiten von Störsignalen weiter unterbunden werden kann. Durch Querschnitte mit mehreren Ecken und Kanten, siehe Isolator 22 in Fig. 3, wird ein durch einen solchen Isolator laufendes Störsignal innerhalb des Isolators mehrfach gebeugt und reflektiert, so dass destruktive Interferenzen die Weiterleitung des Störsignals verhindern können.

Der erfindungsgemäße Ultraschallwandler 3 weist also eine erste akustische Isolierung auf, welche auf mehrfache Art und Weise Störeinflüsse auf das Wandlerelement 11 vermindert.

### Bezugszeichenliste

- 1: Messrohr
- 2: Ultraschallwandleranschluss
- 3: Ultraschallwandler
- 11: Wandlerelement
- 12: akustischer Transformator
- 13: Abstrahlfläche
- 21: erster Isolator
- 22: zweiter Isolator
- 23: dritter Isolator
- 31: Gehäuse
- 32: Gehäusekammer
- 33: Gehäusewandung
- 34: erster axialer Anschlag
- 35: zweiter axialer Anschlag
- 41: zweite akustische Isolierung
- 51: Federelement
- 61: erster Bereich
- 62: zweiter Bereich
- 100: Ultraschall-Durchflussmessgerät
- AM: Messrohrache
- L: Längsachse
- M: Mantelfläche
- F: Führung

## Patentansprüche

1. Ultraschallwandler (3) zur Verwendung in einem Ultraschall-Durchflussmessgerät (100) zur Messung der Durchflussgeschwindigkeit oder dem Volumendurchfluss von Medien in einem Messrohr (1) oder in einem Ultraschall-Füllstandsmessgerät zur Messung von dem Füllstand von Medien in einem Behälter, umfassend:
mindestens ein Wandlerelement (11) zur Erzeugung und/oder Detektion von Ultraschallsignalen;
und mindestens einen akustischen Transformator (12), wobei der akustische Transformator (12) mit dem Wandlerelement (11) akustisch und mechanisch gekoppelt ist;
und wobei der akustische Transformator (12) eine Abstrahlfläche (13) und eine Längsachse (L) aufweist, welche die Abstrahlfläche (13) schneidet;
und mindestens ein Gehäuse (31) mit mindestens einem Gehäusekörper, welcher Gehäusekörper mindestens eine Gehäusekammer (32) mit einer Gehäusewandung (33) aufweist, welche Gehäusewandung (33) den akustischen Transformator (12) zumindest teilweise umschließt, wobei das Gehäuse akustisch und mechanisch mit einer Messrohrwand oder einer Behälterwand verbunden ist,
wobei der akustische Transformator (12) über eine Mantelfläche (M) des akustischen Transformators (12) mittels einer ersten akustischen ringförmigen Isolierung mechanisch mit dem Gehäuse verbunden ist, welche erste akustische Isolierung mit dem Medium beaufschlagbar ist,
wobei die erste akustische Isolierung einen ersten Isolator (21) und einen zweiten Isolator (22) und einen dritten Isolator (23) aufweist, wobei der erste Isolator (21) mit dem akustischen Transformator (12) in Kontakt steht, und wobei der dritte Isolator (23) mit dem Gehäuse in Kontakt steht, und wobei der zweite Isolator (22) zwischen dem ersten Isolator (21) und dem dritten Isolator (23) angeordnet ist,
**dadurch gekennzeichnet, dass**
der zweite Isolator durch den ersten Isolator (21) und den dritten Isolator (23) zumindest teilweise gehalten wird,
der erste Isolator (21) und der dritte Isolator (23) radial eingespannt sind, und der zweite Isolator (22) schwingfähig gelagert ist.

2. Ultraschallwandler nach Anspruch 1,
wobei ein erster zum Medium hin gewandter Bereich (61) von einem vom Medium abgewandten zweiten Bereich (62) in der Gehäusekammer (32) durch die erste akustische Isolierung mediendicht getrennt ist.

3. Ultraschallwandler nach einem der vorigen Ansprüche,
wobei die Isolatoren (21, 22, 23) jeweils aus einem Material der folgenden Materialiengruppen gefertigt sind: Metall, Keramik, Kunststoff, wobei der Kunststoff insbesondere ein Elastomer ist, wobei in Kontakt stehende Isolatoren (21, 22, 23) unterschiedliche akustische Impedanzen aufweisen.

4. Ultraschallwandler nach mindestens einem der vorigen Ansprüche,
wobei der zweite Isolator (22) durch den ersten Isolator (21) und/oder den dritten Isolator (23) gehalten ist.

5. Ultraschallwandler nach einem der vorigen Ansprüche
wobei die Gehäusewandung (33) im zweiten Bereich (62) einen ersten axialen Anschlag (34) aufweist, welcher erste Anschlag dazu eingerichtet ist, bei hohen Drücken des Mediums einen Halt für den zweiten Isolator (22) zu bieten.

6. Ultraschallwandler nach einem der vorigen Ansprüche,
wobei die Gehäusewandung (33) im zweiten Bereich (62) eine Führung (F) aufweist, welche Führung dazu eingerichtet ist, den zweiten Isolator (22) in axialer Richtung zu führen.

7. Ultraschallwandler nach einem der vorigen Ansprüche
wobei mindestens ein Isolator (21, 22, 23) über die Abstrahlfläche des akustischen Transformators axial herausragt.

8. Ultraschallwandler nach einem der vorigen Ansprüche,
wobei der akustische Transformator (12), die erste akustische Isolierung und das Gehäuse im Wesentlichen rotationssymmetrisch bezüglich der Längsachse sind.

9. Ultraschallwandler nach einem der vorigen Ansprüche,
wobei das Gehäuse auf der dem Medium abgewandten Seite einen zweiten axialen Anschlag (35) aufweist, welcher axiale Anschlag mit dem akustischen Transformator (12) und/oder dem Wandlerelement (11) mechanisch gekoppelt ist, und wobei der zweite axiale Anschlag dazu eingerichtet ist, den akustischen Transformator (12) und/oder das Wandlerelement (11) zu halten.

10. Ultraschallwandler nach Anspruch 9,
wobei der Ultraschallwandler eine zweite akustische Isolierung aufweist (41), welche zweite akustische Isolierung dazu eingerichtet ist, den zweiten axialen Anschlag (35) mit dem akustischen Transformator (12) und/oder mit dem Wandlerelement (12) mechanisch zu verbinden und akustisch zu entkoppeln.

11. Ultraschallwandler nach einem der vorigen Ansprüche,
wobei das Wandlerelement (11) ein Piezowandler ist.

12. Ultraschallwandler nach einem der vorigen Ansprüche,
wobei das Gehäuse drucktragend ist.

13. Ultraschallwandler nach einem der vorigen Ansprüche 9 bis 13,
wobei der akustische Transformator (12) und/oder das Wandlerelement (12) mittels eines Federelements (51) gegen den zweiten axialen Anschlag (35) vorgespannt sind.

## Claims

1. Ultrasonic transducer (3) for use in an ultrasonic flowmeter (100) to measure the flow velocity or volume flow of media in a measuring tube (1), or in an ultrasonic flow measuring device to measure the level of media in a vessel, said transducer comprising:
at least one transducer element (11) for the generation and/or detection of ultrasonic signals;
and at least an acoustic transformer (12), wherein the acoustic transformer (12) is acoustically and mechanically coupled to the transducer element (11);
and wherein the acoustic transformer (12) has a radiation surface (13) and a longitudinal axis (L) which intersects the radiation surface (13);
and at least a housing (31) with at least a housing body, wherein said housing body has at least a housing chamber (32) with a housing wall (33), wherein said housing wall (33) at least partially surrounds the acoustic transformer (12), wherein the housing is connected acoustically and mechanically to a measuring tube wall or a vessel wall,
wherein the acoustic transformer (12) is mechanically connected to the housing via a lateral surface (M) of the acoustic transformer (12) by means of a first acoustic annular isolation, wherein said first acoustic isolation can be exposed to the medium,
wherein the first acoustic isolation has a first isolator (21) and a second isolator (22) and
a third isolator (23), wherein the first isolator (21) is in contact with the acoustic transformer (12) and the third isolator (23) is in contact with the housing and wherein the second isolator (22) is arranged between the first isolator (21) and the third isolator (23),
**characterized in that**
the second isolator is at least partially held by the first isolator (21) and the third isolator (23),
wherein the first isolator (21) and the third isolator (23) are radially clamped, and the second isolator (22) is mounted in a manner in which it can oscillate.

2. Ultrasonic transducer as claimed in Claim 1,
wherein a first area (61) facing towards the medium is separated in a medium-tight manner from a second area (62) facing away from the medium in the housing chamber (32) by the first acoustic isolation.

3. Ultrasonic transducer as claimed in one of the previous claims,
wherein the isolators (21, 22, 23) are each made from a material belonging to one of the following material groups:
Metal, ceramic, plastic, wherein the plastic is particularly an elastomer, wherein isolators (21, 22, 23) that are in contact have different acoustic impedances.

4. Ultrasonic transducer as claimed in at least one of the previous claims,
wherein the second isolator (22) is held by the first isolator (21) and/or the third isolator (23).

5. Ultrasonic transducer as claimed in one of the previous claims,
wherein in the second area (62) the housing wall (33) features a first axial limit stop (34), wherein said first limit stop is designed to provide a hold for the second isolator (22) in the event of high medium pressures.

6. Ultrasonic transducer as claimed in one of the previous claims,
wherein in the second area (62) the housing wall (33) features a guide (F), wherein said guide is designed to guide the second isolator (22) in the axial direction.

7. Ultrasonic transducer as claimed in one of the previous claims,
wherein at least an isolator (21, 22, 23) projects axially over the radiation surface of the acoustic transformer.

8. Ultrasonic transducer as claimed in one of the previous claims,
wherein the acoustic transformer (12), the first acoustic isolation and the housing are essentially rotationally symmetric in relation to the longitudinal axis.

9. Ultrasonic transducer as claimed in one of the previous claims,
wherein the housing features a second axial limit stop (35) on the side facing away from the medium, wherein said axial limit stop is mechanically coupled to the acoustic transformer (12) and/or to the transducer element (11), and
wherein the second axial limit stop is designed to hold the acoustic transformer (12) and/or the transducer element (11).

10. Ultrasonic transducer as claimed in Claim 9,
wherein the ultrasonic transducer features a second acoustic isolation (41), wherein said second acoustic isolation is designed to mechanically connect the second axial limit stop (35) to the acoustic transformer (12) and/or the transducer element (11) and acoustically decouple it.

11. Ultrasonic transducer as claimed in one of the previous claims,
wherein the transducer element (11) is a piezo transducer.

12. Ultrasonic transducer as claimed in one of the previous claims,
wherein the housing is pressure bearing.

13. Ultrasonic transducer as claimed in one of the previous Claims 9 to 13,
wherein the acoustic transformer (12) and/or the transducer element (11) are pretensioned against the second axial limit stop (35) by means of a spring element (51).

## Revendications

1. Convertisseur à ultrasons (3) destiné à être utilisé dans un débitmètre à ultrasons (100) destiné à mesurer la vitesse d'écoulement ou le débit volumique de produits dans un tube de mesure (1), ou dans un transmetteur de niveau à ultrasons destiné à mesurer le niveau de produits dans un réservoir, lequel convertisseur comprend :
au moins un élément transducteur (11) pour la génération et/ou la détection de signaux ultrasonores ;
et au moins un transformateur acoustique (12), le transformateur acoustique (12) étant couplé acoustiquement et mécaniquement à l'élément transducteur (11) ;
et le transformateur acoustique (12) présentant une surface de rayonnement (13) et un axe longitudinal (L) qui coupe la surface de rayonnement (13) ;
et au moins un boîtier (31) avec au moins un corps de boîtier, lequel corps de boîtier présente au moins une chambre de boîtier (32) avec une paroi de boîtier (33), laquelle paroi de boîtier (33) entoure au moins partiellement le transformateur acoustique (12), le boîtier étant relié acoustiquement et mécaniquement à une paroi de tube de mesure ou à une paroi de réservoir,
le transformateur acoustique (12) étant relié mécaniquement au boîtier par une surface d'enveloppe (M) du transformateur acoustique (12) au moyen d'une première isolation acoustique annulaire, laquelle première isolation acoustique peut être sollicitée par le produit,
la première isolation acoustique comprenant un premier isolateur (21) et un deuxième isolateur (22) et un troisième isolateur (23), le premier isolateur (21) étant en contact avec le transformateur acoustique (12) et le troisième isolateur (23) étant en contact avec le boîtier, et le deuxième isolateur (22) étant disposé entre le premier isolateur (21) et le troisième isolateur (23),
**caractérisé en ce que**
le deuxième isolateur est maintenu au moins partiellement par le premier isolateur (21) et
le troisième isolateur (23),
le premier isolateur (21) et le troisième isolateur (23) sont serrés radialement, et le deuxième isolateur (22) est monté de manière à pouvoir osciller.

2. Convertisseur à ultrasons selon la revendication 1,
pour lequel une première zone (61) tournée vers le produit est séparée de manière étanche au produit d'une deuxième zone (62) opposée au produit dans la chambre de boîtier (32) par la première isolation acoustique.

3. Convertisseur à ultrasons selon l'une des revendications précédentes,
pour lequel les isolateurs (21, 22, 23) sont chacun fabriqués dans un matériau appartenant aux groupes de matériaux suivants :
Métal, céramique, matière plastique, la matière plastique étant notamment un élastomère, les isolateurs (21, 22, 23) en contact présentant des impédances acoustiques différentes

4. Convertisseur à ultrasons selon au moins l'une des revendications précédentes,
pour lequel le deuxième isolateur (22) est maintenu par le premier isolateur (21 ) et/ou le troisième isolateur (23).

5. Convertisseur à ultrasons selon l'une des revendications précédentes,
pour lequel la paroi de boîtier (33) présente dans la deuxième zone (62) une première butée axiale (34), laquelle première butée est conçue pour offrir un maintien au deuxième isolateur (22) en cas de pressions élevées du produit.

6. Convertisseur à ultrasons selon l'une des revendications précédentes,
pour lequel la paroi de boîtier (33) présente dans la deuxième zone (62) un guidage (F), lequel guidage est conçu pour guider le deuxième isolateur (22) dans la direction axiale.

7. Convertisseur à ultrasons selon l'une des revendications précédentes,
pour lequel au moins un isolateur (21, 22, 23) dépasse axialement de la surface de rayonnement du transformateur acoustique.

8. Convertisseur à ultrasons selon l'une des revendications précédentes,
pour lequel le transformateur acoustique (12), la première isolation acoustique et le boîtier sont pour l'essentiel à symétrie de révolution par rapport à l'axe longitudinal.

9. Convertisseur à ultrasons selon l'une des revendications précédentes,
pour lequel le boîtier présente une deuxième butée axiale (35) sur le côté opposé au produit, laquelle butée axiale est couplée mécaniquement au transformateur acoustique (12) et/ou à l'élément transducteur (11), et
pour lequel la deuxième butée axiale est conçue pour maintenir le transformateur acoustique (12) et/ou l'élément transducteur (11).

10. Convertisseur à ultrasons selon la revendication 9,
pour lequel le transducteur à ultrasons présente une deuxième isolation acoustique (41), laquelle deuxième isolation acoustique est conçue pour relier mécaniquement et découpler acoustiquement la deuxième butée axiale (35) au / par rapport au transformateur acoustique (12) et/ou à l'élément transducteur (11).

11. Convertisseur à ultrasons selon l'une des revendications précédentes,
pour lequel l'élément transducteur (11) est un transducteur piézoélectrique.

12. Convertisseur à ultrasons selon l'une des revendications précédentes,
pour lequel le boîtier supporte la pression.

13. Convertisseur à ultrasons selon l'une des revendications 9 à 13 précédentes,
pour lequel le transformateur acoustique (12) et/ou l'élément transducteur (11) sont précontraints contre la deuxième butée axiale (35) au moyen d'un élément de ressort (51).
